# EUROPEAN PATENT SPECIFICATION

(11) **EP 4 540 431 B1**
(45) Date of publication and mention of the grant of the patent: **12.11.2025**
(21) Application number: 23748619.6
(22) Date of filing: 14.07.2023
(51) Int. Cl.: C22B 3/42, C22B 7/00, C22B 21/00, C22B 26/12, C22B 26/22, H01M 10/54, C22B 47/00

(54) **METHOD FOR RECOVERING METALS**
VERFAHREN ZUR RÜCKGEWINNUNG VON METALLEN
PROCÉDÉ DE RÉCUPÉRATION DE MÉTAUX

(30) Priority: 14.07.2022 JP 2022113465
(43) Date of publication of application: 23.04.2025
(73) Proprietor: JX Metals Circular Solutions Co., Ltd., Tokyo 105-8417 (JP)
(72) Inventor: ARAKAWA,Junichi, Hitachi-shi, Ibaraki 317-0056 (JP); KASHIMURA,Hiromichi, Hitachi-shi, Ibaraki 317-0056 (JP); KAMIYAMA,Eriko, Hitachi-shi, Ibaraki 317-0056 (JP)
(74) Representative: Arnold & Siedsma
(86) International application number: PCT/JP2023/026111
(87) International publication number: WO 2024/014541

(56) References cited:
- EP-A1- 3 950 978
- WO-A1-2018/181816
- CA-A1- 3 125 089
- CN-A- 108 517 409
- CN-A- 109 402 394
- CN-A- 110 760 686
- CN-A- 112 877 548
- CN-A- 114 207 162

## Description

### Technical Field

This specification discloses a method for recovering metals.

### Background Art

In recent years, it has been widely studied for recovery of valuable metals such as cobalt and nickel contained in lithium ion battery waste discarded for expired product life, manufacturing defects or other reasons, in terms of effective utilization of resources.

The process of recovering valuable metals from lithium ion battery waste can include, for example, roasting or other predetermined dry processes of lithium ion battery waste, and wet processes of the battery powder obtained after the dry processes.

Specifically, in the wet processes, metals such as cobalt, nickel, manganese, lithium, aluminum, and iron in the battery powder are leached with an acid to obtain a metal-containing solution containing the metals dissolved. Aluminum ions, iron ions, manganese ions, and the like are then sequentially or simultaneously removed from the metal-containing solution by neutralization or solvent extraction, as described, for example, in Patent Literature 1. Cobalt ions and nickel ions in the metal-containing solution are then separated by solvent extraction. After separating the nickel ions by extraction, a metal-containing solution is obtained in which lithium ions remain. The metal-containing solution thus obtained is subjected to, for example, concentration of lithium ions by repeating solvent extraction.

### Citation List

### Patent Literature

PTL 1: WO 2018/181816 A1
PTL2: CN109402394 B
PTL3: EP3950978 A1
PTL4: CA3125089 A1

### Summary of Invention

### Technical Problem

By the way, the metal-containing solution obtained after separating cobalt ions and/ or nickel ions or other metals by solvent extraction or the like contains lithium ions. If a lithium hydroxide solution can be produced therefrom, it can be effectively used as a pH adjusting agent or the like.

However, the metal-containing solution contains impurities such as fluoride ions. Even if the lithium hydroxide solution can be obtained by separating the impurities from such a metal-containing solution, it will be necessary to treat the solution containing the separated impurities.

This specification provides a method for recovering metals, which can produce a lithium hydroxide solution from a metal-containing solution and appropriately process the impurities separated at that time.

### Solution to Problem

The invention is conducted as described in claims 1 and 3.

### Advantageous Effects of Invention

According to the method for recovering metals as described above, it is possible to produce a lithium hydroxide solution from a metal-containing solution and appropriately process the impurities separated at that time.

### Brief Description of Drawings

[Fig.1]Fig. 1 is a flow chart showing an example of a method for recovering metals including an impurity removal method according to an embodiment.
[Fig.2]Fig. 2 is a flow chart showing an example of a preprocessing step for obtaining battery powder from lithium ion battery waste.
[Fig.3]Fig. 3 is a cross-sectional view schematically showing an example of a bipolar membrane electrodialysis device that can be used in an electrodialysis step included in an impurity removal method according to an embodiment.
[Fig.4]Fig. 4 is a view showing components of each solution before and after electrodialysis in Example.

### Description of Embodiments

Embodiments of the method for recovering metals described above will be described below in detail.

An embodiment of the method for recovering metals is a method for recovering metals from battery powder of lithium ion battery waste, including: an acid leaching step of leaching the metals in the battery powder with an acid to obtain a metal-containing solution containing lithium ions and other metal ions including manganese ions and/or aluminum ions; a metal separation step of separating the other metal ions from the metal-containing solution, the metal separation step including extraction of manganese ions and/or aluminum ions from the metal-containing solution into a solvent and, after the extraction, stripping of manganese ions and/or aluminum ions from the solvent into a stripping solution; and, after the metal separation step, an electrodialysis step of subjecting the metal-containing solution containing lithium ions and fluoride ions to electrodialysis using a bipolar membrane to obtain a lithium hydroxide solution and an acidic solution comprising fluoride ions.

In an embodiment, the acidic solution obtained in the electrodialysis step is used as at least part of the stripping solution in the metal separation step. In the extraction of manganese ions and/or aluminum ions, relatively large amounts of metals or substances tend to be extracted into the solvent, and a stripped solution obtained by subjecting the solvent to the stripping also contains large amounts of substances, and it is, therefore, preferably discarded. Herein, the fluoride ions contained as impurities in the acidic solution can be allowed to be contained in the stripped solution and properly discarded while effectively using the acidic solution for the stripping.

In another embodiment, the extraction and stripping of manganese and/or aluminum ions in the metal separation step is followed by further scavenging to remove residual components from the solvent with a scavenging solution. Then, the acidic solution obtained in the electrodialysis step is used as at least part of the scavenging solution in the metal separation step. The scavenged solution after scavenging may contain substances such as calcium that can be combined with fluoride ions. Therefore, the acidic solution containing fluoride ions can be used as at least part of the scavenging solution, thereby depositing/precipitating the fluoride ions in the scavenged solution and removing them. The scavenged solution from which the fluoride ions have been removed can be used as the acid in the acid leaching step.

If the acidic solution obtained in the electrodialysis step is used as it is as an acid in the acid leaching step, there is concern that the fluoride ions in the acidic solution will be accumulated and concentrated in the wet processes, thereby affecting the wet processes. On the other hand, in the embodiment as described above, the acidic solution is allowed to be contained in the stripping solution or the scavenging solution, so that the accumulation and concentration of fluoride ions can be suppressed.

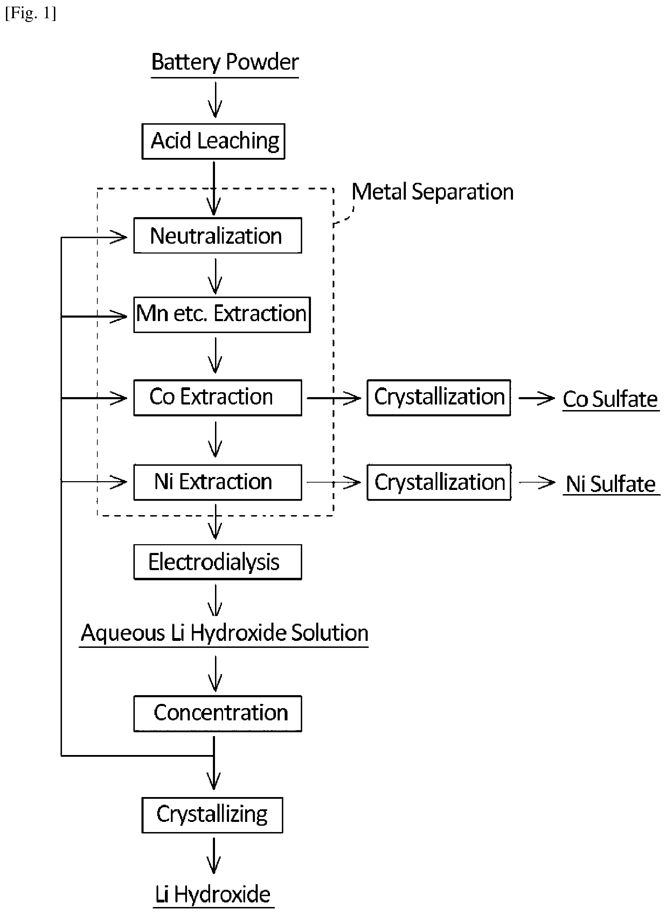

The method for recovering metals according to the embodiment as described herein, as illustrated in Fig. 1, carries out, as a wet process, the acid leaching step of leaching the battery powder of the lithium ion battery waste with an acid to obtain a metal-containing solution, and the metal separation step and the electrodialysis step as described above. The lithium hydroxide solution obtained in the electrodialysis step is optionally concentrated and then used as a pH adjusting agent in the metal separation step. In Fig. 1, the metal separation step includes neutralization, solvent extraction of manganese and/or aluminum ions (Mn etc. Extraction), solvent extraction of cobalt ions, and solvent extraction of nickel ions. However, depending on the type of metal ions other than lithium ions contained in the metal-containing solution, at least one of the neutralization and multiple solvent extraction processes may be omitted.

### (Lithium Ion Battery Waste)

The lithium ion battery waste of interest is lithium ion secondary batteries which can be used in various electronic devices such as mobile phones and which have been discarded due to the expired life of the product, manufacturing defects or other reasons. The recovery of valuable metals from such lithium ion battery waste is preferred in terms of effective utilization of resources.

The lithium ion battery waste has a housing containing aluminum as an exterior that wraps around the lithium ion secondary battery. Examples of the housing include those made only of aluminum and those containing aluminum, iron, aluminum laminate, and the like.

The lithium ion battery waste may also contain, in the above housing, cathode active materials composed of one single metal oxide containing lithium and one selected from the group consisting of nickel, cobalt and manganese, or a composite metal oxides containing lithium and two or more of those, or the like, and aluminum foils (cathode substrates) to which the cathode active materials are applied and fixed by, for example, polyvinylidene fluoride (PVDF) or other organic binders. In addition, the lithium ion battery waste may contain copper, iron, or the like.

Further, the housing of the lithium ion battery waste generally contains an electrolytic solution having an electrolyte such as lithium hexafluorophosphate dissolved in an organic solvent. For example, ethylene carbonate, diethyl carbonate or the like may be used as the organic solvent.

### (Preprocessing)

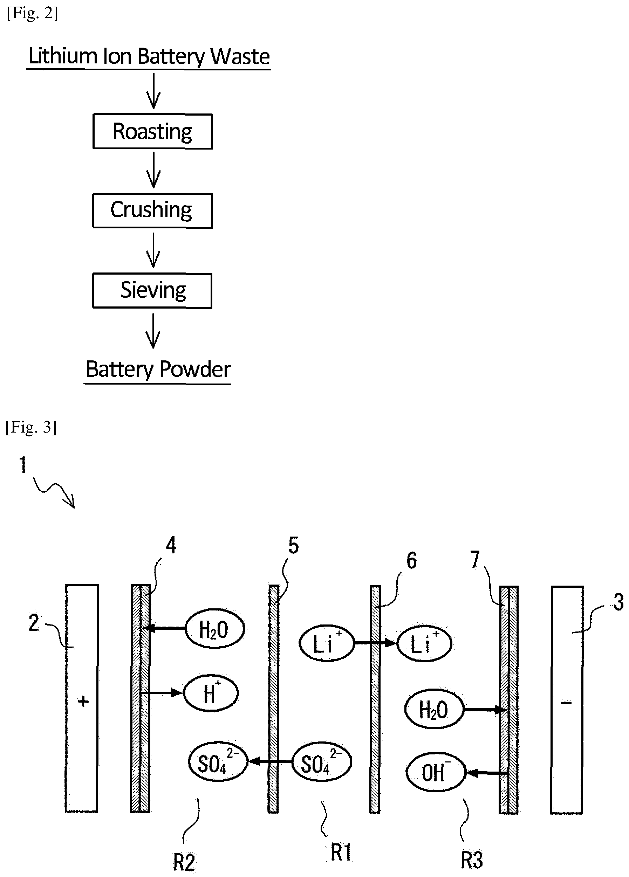

In many cases, the lithium ion battery waste is subjected to preprocessing as a dry process. The preprocessing may include at least one of roasting, crushing and sieving. The lithium ion battery waste becomes battery powder through the preprocessing. The roasting, crushing, and sieving in the preprocessing step may optionally be performed, respectively, or they may be performed in any order. In the example shown in Fig. 2, the roasting, crushing and sieving are performed in this order.

It should be noted that the battery powder means a powder obtained by subjecting the lithium ion battery waste to any process to concentrate cathode material components. The battery powder may be obtained as a powder by crushing and sieving the lithium ion battery waste with or without a heat treatment to concentrate the cathode material components.

In the roasting, the above lithium ion battery waste is heated. When the roasting is carried out, metals such as lithium and cobalt contained in the lithium ion battery waste is changed to an easily dissolvable form. During the roasting, the lithium ion battery waste is preferably heated by maintaining it in a temperature range of, for example, from 450°C to 1000°C, further in a temperature range of from 600°C to 800°C, for 0.5 to 4 hours. The roasting can be carried out in either an air atmosphere or an inert atmosphere such as nitrogen, and in the air atmosphere and the inert atmospheres in this order or vice versa. The roasting can be of batch type or continuous type. For example, the batch type includes a stationary furnace, the continuous type includes a rotary kiln furnace, and other various types of furnaces can also be used.

During the roasting, at least a part of the electrolytic solution is removed from the lithium ion battery waste because the electrolytic solution is evaporated, or the like. In many cases, when the lithium ion battery waste is heated during the roasting, the components of the internal electrolyte are sequentially evaporated, starting with the component having a lower boiling point. Also, when the temperature of the lithium ion battery waste reaches a higher temperature, the resin such as the organic binder is decomposed or vaporized. Even if a part of the electrolyte and the organic binder is thus removed, a certain component such as fluorine contained in the electrolyte and the organic binder remains and may be contained in the battery powder obtained after the preprocessing step. When the roasting is carried out, the electrolytic solution is removed and rendered harmless, and the organic binder is decomposed to promote separation between the aluminum foil and the cathode active material during crushing and sieving, which will be described below. Although the roasting changes the composition of the cathode active material, the roasted material is also referred to as the cathode active material.

After the roasting, the crushing can be carried out to remove cathode materials and the like from the housing of the lithium ion battery waste. The crushing selectively separates the cathode active materials from the aluminum foils to which the cathode active materials are applied, while destroying the housing of the lithium ion battery waste.

Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an outlet of the crusher, whereby the lithium ion battery waste is discharged from the crusher through the screen when crushed to a size that can pass through the screen.

After crushing the lithium ion battery waste, the sieving is performed by sieving it using a sieve having an appropriate opening. Thus, aluminum or copper remains on the sieve, and battery powder from which Al or Cu has been removed to some extent can be obtained under the sieve.

The battery powder obtained in the preprocessing step contains lithium, and in addition to lithium, at least one other metal selected from the group consisting of cobalt, nickel, manganese, aluminum, iron and copper. Typically, the battery powder contains lithium and at least one of nickel and cobalt. For example, the lithium content of the battery powder is 2% to 8% by mass, the cobalt content is 1% to 30% by mass, the nickel content is 1% to 30% by mass, the manganese content is 1% to 30% by mass, the aluminum content is 1% to 10% by mass, the iron content is 1% to 5% by mass, and the copper content is 1% to 10% by mass. The battery powder may also contain 0.1% by mass to 10% by mass of fluorine.

The battery powder can be brought into contact with water prior to an acid leaching step as described below, in order to extract substantially only lithium from the battery powder. Lithium in the battery powder is thus leached into the water. In this case, the battery powder as the water leached residue is subjected to the acid leaching step. However, when the water leaching is carried out, the equipment is required, and the processing time increases by performing both the water leaching and the acid leaching in the acid leaching step, as well as it may be necessary to manage the roasting conditions for effectively leaching lithium with water. Further, even with such management, the leaching rate of lithium with water may not be significantly increased. Therefore, the battery powder obtained as described above may be subjected to acid leaching in the acid leaching step without the water leaching. When the water leaching is not carried out, the lithium ion concentration in the liquid can be easily maintained at a higher level in wet processes after the acid leaching step.

### (Acid Leaching Step)

In the acid leaching step, lithium and other metal contained in the lithium ion battery waste are leached with an acid by adding the above battery powder to an acidic leaching solution of sulfuric acid, nitric acid, hydrochloric acid or other inorganic acids.

The acid leaching step can be performed by a known method or conditions, but a pH is preferably 0.0 to 2.0, and an oxidation-reduction potential (ORP value, based on silver/silver chloride potential) may be 0 mV or less.

A leached residue that has remained after the acid leaching can be separated from the metal-containing solution by means of solid-liquid separation such as filtration using a known apparatus and method such as a filter press and a thickener. Most of the copper in the battery powder may be contained in the leached residue. The solid-liquid separation may be omitted, and the metal separation step such as neutralization may be performed after leaching without solid-liquid separation.

The acid leaching step provides the metal-containing solution containing lithium ions and other metal ions. The other metal ions may be at least one selected from the group consisting of cobalt ions, nickel ions, manganese ions, aluminum ions, iron ions and copper ions, typically cobalt ions and/or nickel ions. The metal-containing solution may also contain fluoride ions.

The metal-containing solution obtained in the acid leaching step has a cobalt ion concentration of 10 g/L to 50 g/L, a nickel ion concentration of 10 g/L to 50 g/L, a manganese ion concentration of 0 g/L to 50 g/L, an aluminum ion concentration of 1.0 g/L to 20 g/L, an iron ion concentration of 0.1 g/L to 5.0 g/L, a copper ion concentration of 0.005 g/L to 0.2 g/L, and a fluoride ion concentration of 0.01 g/L to 20 g/ L. The metal-containing solution is subjected to the metal separation step described below.

### (Neutralization)

When the metal-containing solution obtained in the acid leaching step contains aluminum ions and/or iron ions, first, the metal separation step carries out neutralization of increasing the pH of the metal-containing solution to separate a neutralized residue to obtain a neutralized solution. The neutralization may include an aluminum removal stage and an iron removal stage. However, if the metal-containing solution does not contain aluminum ions and/or iron ions, the aluminum removal step and/or iron removal step may be omitted.

In the aluminum removal step, the pH of the metal-containing solution is increased to precipitate at least a part of the aluminum ions and remove them by solid-liquid separation. At this time, for example, when the pH is increased in the range of 4.0 to 5.0 with a pH adjusting agent at a solution temperature of 50°C to 90°C, the aluminum ions can be effectively separated while suppressing precipitation of nickel ions and/or cobalt ions.

In the iron removal step, an oxidizing agent is added and a pH adjusting agent is further added to increase the pH. As a result, the iron ions are oxidized from divalent to trivalent, and precipitated as a solid such as an oxide or iron hydroxide (Fe(OH)₃), which can be removed by solid-liquid separation. The ORP value during oxidation is preferably 300 mV to 900 mV. The oxidizing agent is not particularly limited as long as it can oxidize iron, but it may preferably be manganese dioxide, a cathode active material, and/or a manganese-containing leached residue obtained by leaching a cathode active material. The manganese-containing leached residue obtained by leaching the cathode active material with the acid may include manganese dioxide. When the cathode active material or the like is used as the oxidizing agent, it causes a precipitation reaction which converts manganese dissolved in the liquid to manganese dioxide, so that the precipitated manganese can be removed together with iron.

Examples of the pH adjusting agent used in neutralization in the above aluminum removal stage and iron removal step include lithium hydroxide, sodium hydroxide, sodium carbonate, and ammonia. A lithium hydroxide solution obtained in an electrodialysis step as described below is preferably used. In this case, lithium ions are circulated in the wet processes.

### (Manganese etc. Extraction Step)

The metal-containing solution can be subjected to solvent extraction to extract and remove the manganese ions, through the above neutralization if necessary. Here, when the metal-containing solution contains aluminum ions, the manganese ions as well as the aluminum ions are extracted and removed.

In the extraction of the manganese ions, an extracting agent containing a phosphate ester-based extracting agent is preferably used. Here, specific examples of the phosphate ester-based extracting agent include di-2-ethylhexylphosphoric acid (abbreviated name: D2EHPA or trade name: DP8R).

Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like.

The extracting agent may be diluted with an aromatic, paraffinic, naphthenic, or other hydrocarbon organic solvent to a concentration of 10% to 30% by volume and used as a solvent.

During extraction, an equilibrium pH is preferably 2.3 to 3.5, and more preferably 2.5 to 3.0. As the pH adjusting agent used at this time, it is preferable to use an aqueous lithium hydroxide solution obtained in an electrodialysis step as described below.

At the time of extraction, it is desirable to carry out extraction by countercurrent type multistage extraction in which directions of flow of the aqueous phase and the solvent used for each extraction are opposite to each other. By doing so, the extraction of cobalt ions, nickel ions, and lithium ions can be suppressed, and the extraction rate of manganese ions can be increased. In the case of the countercurrent type multistage extraction, it is effective to set the equilibrium pH at the first stage of extraction to a value in the above range, and decrease the equilibrium pH at the time of extraction through successive stages.

The solvent which has extracted manganese ions and/or aluminum ions is subjected to stripping after scrubbing as necessary. An inorganic acid such as sulfuric acid, nitric acid, or hydrochloric acid is used as the stripping solution used for the stripping, and a part or all of it can preferably be an acidic solution obtained in an electrodialysis step as described below. In addition to manganese ions and the like, various metals or substances may be mixed in the stripped solution. By using the above acidic solution at least part of the stripping solution, the fluoride ions in the acidic solution will be contained in the stripping solution, and the fluoride ions can be disposed together with other metals or substances in the stripping solution. During the stripping, for example, the pH may be 0.0 to 1.0 and the O/A ratio may be 0.5 to 2.0. The acid concentration at this time may be 10 g/L to 100 g/L.

The stripped solution containing manganese ions and/or aluminum ions or fluoride ions can be subjected to a wastewater treatment that can render the solution disposable. The wastewater treatment includes mixing the solution with other wastewater to lower the fluoride ion concentration below the wastewater standard value. Alternatively, slaked lime or calcium chloride may be added to precipitate fluoride ions as calcium fluoride, and the resulting precipitate may be removed or discarded. The stripped solution may be neutralized in order to precipitate manganese ions or the like other than fluoride ions as a hydroxide or the like as necessary.

The solvent that has undergone the stripping is subjected to scavenging so that it can be reused. The scavenging is carried out by mixing the scavenging solution and the solvent with stirring using a mixer or the like. As a result, residual components that have not been separated by scrubbing or stripping are removed from the solvent. The acid concentration during scavenging may be 300 g/L to 550 g/L and the ratio O/A may be 0.5 to 2.0. Thus, the acid concentration during scavenging may be higher than the acid concentration during the stripping as described above.

A part or all of the inorganic acid scavenging solution such as sulfuric acid, nitric acid, or hydrochloric acid used for scavenging is preferably an acidic solution obtained in the electrodialysis step described below. This is because in the scavenged solution, calcium and the like contained in the solvent may be accumulated, and the fluoride ions contained in the acidic solution may be removed by reacting with the calcium and the like in the scavenged solution. In an example, the calcium concentration may be 0.025 g/L in the stripping solution, whereas it may be 0.186 g/L in the scavenging solution. A part of the scavenged solution may be used in the acid leaching step, but the remaining is often used repeatedly in scavenging as a scavenging solution, which can cause calcium to be accumulated in the scavenging solution. When the scavenged solution contains fluoride ions and calcium, it is believed that the reaction of them produces calcium fluoride (CaF₂). The precipitate produced by the reaction of fluoride ions with calcium can be removed by a back filter, filter press, or the like.

The scavenged solution from which the fluoride ions have been removed as described above can be used as at least a part of the acid in the acid leaching step. If the acid solution obtained in the electrodialysis step is directly used for the acid leaching, the fluoride ions in the acidic solution will be returned to the wet process, and will be combined with the fluoride ions contained in the battery powder newly introduced to the acid leaching process to accumulate the fluoride ions during the steps of the wet processes. On the other hand, here, the acidic solution is used as at least part of the scavenging solution, and the scavenged solution obtained after that is used for the acid leaching, whereby the fluoride ions are removed during the scavenging as described below, so that the accumulation of fluoride ions during the steps of the wet processes can be suppressed.

Also, here, the acidic solution obtained in the electrodialysis step is used as at least part of the scavenging solution, thereby removing the calcium in the scavenging solution as described above. As a result, the clogging of piping with calcium in the manganese extraction step can be suppressed. It is considered that the clogging of the piping is caused by precipitation of calcium in the scavenging solution as calcium sulfate. In particular, the scavenging solution often has a relatively high sulfuric acid concentration, and as the sulfuric acid concentration is higher, the solubility of calcium sulfate is lower, so that calcium sulfate is easily precipitated.

### (Cobalt Extraction and Crystallization)

For example, after manganese ions are extracted, cobalt ions can be extracted and separated from a manganese extracted solution (metal-containing solution) by solvent extraction.

It is preferable to use a solvent containing a phosphonate ester-based extracting agent for the extraction of the cobalt ions. Particularly, 2-ethylhexyl 2-ethylhexylphosphonate (trade name: PC-88A, Ionquest 801) is preferable from the viewpoint of separation efficiency between nickel and cobalt. The extracting agent may be diluted with a hydrocarbon-based organic solvent so as to have a concentration of 10% by volume to 30% by volume and used as a solvent.

When extracting the cobalt ions, the equilibrium pH during extraction is preferably 5.0 to 6.0, and more preferably 5.0 to 5.5. If the pH is less than 5.0, cobalt ions may not be sufficiently extracted into the solvent. As the pH adjusting agent at this time, it is preferable to use an aqueous lithium hydroxide solution obtained in the electrodialysis step as described later.

In the extraction of the cobalt ions as well, it is desirable to carry out the extraction by countercurrent type multistage extraction in which directions of flow of the aqueous phase and the solvent used for each extraction are opposite to each other. By doing so, it is possible to increase an extraction rate of cobalt ions while suppressing the extraction of nickel ions and lithium ions.

During the above extraction, not only cobalt ions but also nickel ions and lithium ions may be somewhat extracted into the solvent. In this case, if necessary, the solvent which has extracted the cobalt ions may be subjected to one or more scrubbing processes using a scrubbing solution to remove nickel ions and lithium ions that may be contained in the solvent. The scrubbing solution can be, for example, a sulfuric acid solution and can have a pH of 3.5 to 5.5. The scrubbed solution may contain nickel ions and lithium ions. Therefore, a part or all of the scrubbed solution is mixed with the manganese extracted solution and it is used as an extracting solution to be subjected to the extraction of the cobalt ions. As a result, the nickel ions and lithium ions can be circulated or retained in the wet processes without losing them. However, if the solvent used to extract the cobalt ions does not contain nickel ions or lithium ions, the scrubbing step may not be performed.

The solvent which has extracted the cobalt ions is then subjected to stripping. A stripping solution used for the stripping may be any inorganic acid such as sulfuric acid, hydrochloric acid, and nitric acid, but sulfuric acid is preferable when a sulfate is obtained in the next crystallization. Here, it is carried out under pH conditions such that all the cobalt ions transfer from the solvent to the stripping solution as much as possible. More particularly, the pH is preferably in the range of 2.0 to 4.0, and more preferably in the range of 2.5 to 3.5.

The stripped solution can be subjected to crystallization. Here, the stripped solution is heated to, for example, 40°C to 120°C and concentrated. As a result, the cobalt ions are crystallized to obtain a cobalt salt such as cobalt sulfate. The cobalt salt thus obtained preferably has a nickel content of 5 ppm by mass or less, and have sufficiently removed the nickel, so that it can be effectively used as a raw material for producing lithium ion secondary batteries and other batteries. Here, the crystallized solution may contain uncrystallized cobalt ions and lithium ions. Therefore, it is preferable that the crystallized solution is mixed with the stripped solution before the crystallization and used for recrystallization, or used for adjusting the cobalt ion concentration of the scrubbing solution used for the solvent which has extracted the cobalt ions, or mixed with the manganese extracted solution and used for the extraction of the cobalt ions. By doing so, the cobalt ions and lithium ions can be circulated or retained and concentrated in the wet processes without losing them.

### (Nickel Extraction and Crystallization)

The cobalt extracted solution (metal-containing solution) after the cobalt ions have been extracted can be subjected to solvent extraction to extract nickel ions.

In the extraction of nickel, a carboxylic acid-based extracting agent is preferably used to separate nickel ions from the cobalt extracted solution. Examples of the carboxylic acid-based extracting agent include neodecanoic acid and naphthenic acid. Among them, the neodecanoic acid is preferred because of its ability to extract nickel ions. The extracting agent may be diluted with an aromatic, paraffinic, naphthenic, or other hydrocarbon organic solvent to a concentration of 10% to 30% by volume and used as a solvent.

The equilibrium pH during the extraction is preferably 6.0 to 8.0, and more preferably 6.8 to 7.2. The pH adjusting agent used to adjust the pH at this time is preferably an aqueous lithium hydroxide solution obtained in an electrodialysis step as described below. In the extraction of the nickel ions, it is desirable to perform the countercurrent type multistage extraction. By doing so, the extraction of lithium ions can be suppressed, and the extraction rate of nickel ions can be increased.

The solvent which has extracted the nickel ions may optionally be subjected to one or more scrubbing processes using a scrubbing solution to remove lithium ions that may be contained in the solvent. The scrubbing solution can be, for example, a sulfuric acid solution and can have a pH of 5.0 to 6.0. Here, the resulting scrubbed solution may contain lithium ions. Therefore, it is preferable that a part or all of the scrubbed solution is mixed with the cobalt extracted solution and it is used as the extracting solution to be subjected to the extraction of the nickel ions. As a result, the lithium ions can be circulated or retained and concentrated in the wet processes without losing them. However, if the solvent used to extract the nickel ions does not contain lithium ions, the scrubbing may not be performed.

The solvent is then subjected to stripping using a stripping solution such as sulfuric acid, hydrochloric acid, or nitric acid. The sulfuric acid is particularly preferred if crystallization is then performed. The pH is preferably in the range of 1.0 to 3.0, and more preferably 1.5 to 2.5. Although the O/A ratio and the number of times can be determined as needed, the O/A ratio is 5 to 1, and more preferably 4 to 2.

When the extracted solution such as a nickel sulfate solution is obtained by the stripping, electrolysis and dissolution can be carried out as needed, and the solution can be then heated to 40°C to 120°C in the crystallization to crystalize the nickel ions as a nickel salt such as nickel sulfate. This provides the nickel salt. Here, the crystallized solution may contain uncrystallized nickel ions and lithium ions. Therefore, the crystallized solution is mixed with the stripped solution before the crystallization and used for recrystallization, or used for adjusting the nickel ion concentration of the scrubbing solution with respect to the solvent which has extracted the nickel ions, or mixed with the cobalt extracted solution and used for the extraction of the nickel ions. By repeatedly using them in the steps in this manner, the nickel ions and lithium ions can be circulated or retained and concentrated in the wet processes without losing them.

The nickel extracted solution from which the nickel ions have been extracted mainly contains lithium ions and may be added to the acidic leaching solution in the leaching step. This allows the lithium ions contained in the nickel extracted solution to be circulated in a series of steps from the acid leaching step to the nickel extraction. Preferably, after the lithium ion concentration in the nickel extracted solution has been increased to some extent by thus circulating the lithium ions, an electrodialysis step as described below can be carried out.

### (Electrodialysis Step)

The metal-containing solution such as the extracted nickel solution obtained in the metal separation step described above is one in which lithium ions and metals other than impurities are sufficiently separated, and mainly contains lithium ions. The metal-containing solution contains fluoride ions (F⁻) as impurities derived from, for example, the electrolytic solution contained in the battery powder.

The metal-containing solution may contain trace amounts of cations such as nickel ions and magnesium ions that could not be completely separated in the metal separation step. The nickel ions and magnesium ions are cations like lithium ions, and exhibit the same behavior as lithium ions during electrodialysis, so that it is difficult to separate them from lithium ions. Also, when the electrodialysis is performed on the metal-containing solution containing the nickel ions and magnesium ions, hydroxides of nickel and magnesium may be generated in the resulting lithium hydroxide solution, and the electrodialysis cannot be continued due to troubles of the steps. Therefore, in such a case, it is desirable to wash the metal-containing solution to remove cations such as nickel ions and magnesium ions prior to the electrodialysis which will be described below. The washing can be carried out using an ion exchange resin or a chelate resin, for example.

The metal-containing solution prior to the electrodialysis step may, for example, have a lithium ion concentration of 1.0 g/L to 30.0 g/L and a fluoride ion concentration of 0.01 g/L to 5.0 g/L.

When a lithium hydroxide solution is obtained from the above metal-containing solution, application of carbonation, chemical conversion, or the like causes impurities to remain in the lithium hydroxide solution without being removed. The use of the lithium hydroxide solution containing larger amounts of impurities as a pH adjusting agent in the metal separation step is undesirable because not only lithium ions but also impurities are circulated or accumulated in the wet processes.

Therefore, in this embodiment, the metal-containing solution is subjected to the electrodialysis step to obtain a lithium hydroxide solution and an acidic solution from the metal-containing solution. As a result, since most of the impurities are contained in the acidic solution, it is possible to obtain the lithium hydroxide solution from which the impurities have been sufficiently removed.

The electrodialysis step can be performed, for example, using a commercially available bipolar membrane electrodialysis device. As an example, a bipolar membrane electrodialysis device 1 (hereinafter, also referred to as a "electrodialysis device") shown in Fig.3 has, in a cell, a positive electrode 2 and a negative electrode 3; and a bipolar membrane 4, an anion exchange membrane 5, a cation exchange membrane 6, and a bipolar membrane 7, which are arranged in this order between the positive electrode 2 and the negative electrode 3 from the positive electrode 2 side to the negative electrode 3 side. These separate the interior of the cell into a desalination chamber R1 between the anion exchange membrane 5 and the cation exchange membrane 6, an acidic chamber R2 between the bipolar membrane 4 and the anion exchange membrane 5, and an alkaline chamber R3a between the cation exchange membrane 6 and the bipolar membrane 7. Each of the bipolar membranes 4 and 7 is constructed by laminating a cation exchange layer and an anion exchange layer.

In order to carry out electrodialysis by the illustrated electrodialysis device 1, the metal-containing solution is placed in the desalination chamber R1, and pure water is also placed in each of the acidic chamber R2 and the alkaline chamber R3, and a predetermined voltage is applied to the positive electrode 2 and the negative electrode 3. Then, lithium ions (Li⁺) in the metal-containing solution in the desalination chamber R1 pass through the cation exchange membrane 6 and move to the alkaline chamber R3. In the alkaline chamber R3, water (H₂O) is decomposed by the bipolar membrane 7 and hydroxide ions (OH⁻) are present, so that a lithium hydroxide solution is obtained.

On the other hand, the anions of the inorganic acid in the metal-containing solution in the desalination chamber R1 pass through the anion exchange membrane 5 and move to the acidic chamber R2. In the acidic chamber R2, an acidic solution such as a sulfuric acid solution is generated by the anions and hydrogen ions (H⁺) generated from water (H₂O) by the bipolar membrane 4. It should be noted that the anions of the inorganic acid are sulfate ions (SO₄²⁻) in the illustrated example, but they may be nitrate ions (NO₃⁻) or chloride ions (Cl⁻) depending on the type of the acid used in the acid leaching step.

In the desalination chamber R1, the lithium salt is separated from the metal-containing solution as described above, and a desalinated solution remains. The anion concentration of the inorganic acid tends to be higher in the acidic solution than in the lithium hydroxide solution, and tends to be higher in the desalinated solution than in the lithium hydroxide solution.

In the electrodialysis, most of the impurity fluoride ions in the metal-containing solution move from the desalination chamber R1 to the acidic chamber R2 through the anion exchange membrane 5 and are contained in the acidic solution. As a result, a lithium hydroxide solution substantially free of fluoride ions is obtained in the alkaline chamber R3. Therefore, the fluoride ion concentration of the lithium hydroxide solution is lower than that of the acidic solution.

The lithium hydroxide solution from which impurities have been removed by electrodialysis as described above can be effectively used as a pH adjusting agent in the metal separation step. After the electrodialysis, the lithium hydroxide solution may optionally be used as a pH adjusting agent after increasing the lithium ion concentration of the lithium hydroxide solution by heat concentration or the like.

The acidic solution obtained by the electrodialysis contains fluoride ions. The acidic solution can be discarded as it is, but as described above, the acidic solution is preferably used by allowing it to be contained in the stripping solution or scavenging solution for extracting manganese or the like in the metal separation step.

### (Crystallizing Step)

A part of the lithium hydroxide solution obtained in the electrodialysis step can be subjected to a crystallizing step. For example, when the lithium hydroxide solution is returned to the wet process as a pH adjusting agent as described above, the lithium in the battery powder newly added to the wet process may gradually increase the lithium ion concentration in the liquid. Depending on the lithium ion concentration, the crystallizing step may be performed to recover lithium hydroxide.

In the crystallizing step, a crystallizing operation such as heat concentration or vacuum distillation can be performed in order to deposit lithium hydroxide. For the heat concentration, a higher temperature during crystallizing leads to faster progression of the process, which is preferable. However, the temperature of the crystallized product after crystallizing can be a temperature of less than 60°C at which water of crystallization is not released. This is because anhydrous lithium hydroxide from which the water of crystallization has been released is deliquescent and thus difficult to be handled.

In addition, a pulverization process or the like can be then performed in order to adjust the above lithium hydroxide to required physical properties.

### Examples

Next, the method for recovering metals as described above was experimentally carried out and the effects thereof were confirmed, as described below. However, the descriptions herein are merely for illustrative and are not intended to be limited.

The metal-containing solution obtained by leaching the battery powder with sulfuric acid was subjected to neutralization, manganese extraction, cobalt extraction and nickel extraction to separate each metal.

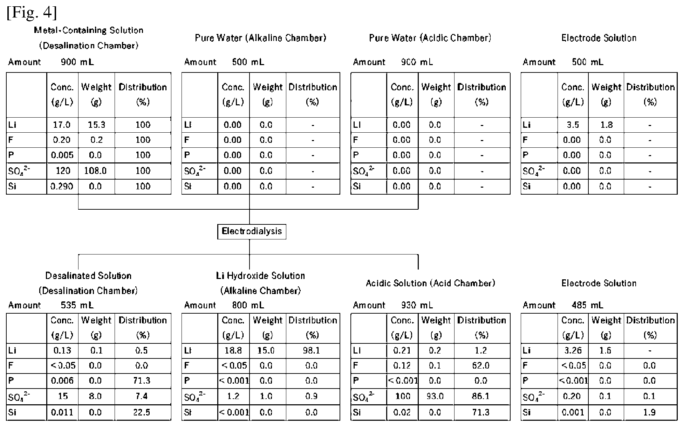

The separated metal-containing solution was then subjected to electrodialysis using a bipolar membrane electrodialysis device (manufactured by ASTOM Corporation) having a structure as shown in Fig. 3. Here, the metal-containing solution having each composition shown in Fig. 4, pure water, and an electrode solution were introduced into the desalination chamber, the alkaline chamber, the acidic chamber, and the electrode chamber, respectively. The electrodialysis was carried out under the condition of a constant voltage of 32V.

The results are also shown in Fig 4. In Fig. 4, the reason why the distribution ratios of the ions in the desalinated solution after electrodialysis, the lithium hydroxide solution, the acidic solution, and the electrode solution do not reach 100% even if the respective distribution ratios are added up would be because of the variation in analytical values (it does not include those which could not be quantified due to the lower limit of analysis, or the like).

It is found from Fig. 4 that the fluoride ion concentration, the phosphorus concentration and the silicon concentration in the lithium hydroxide solution obtained after electrodialysis are all sufficiently low. This indicates that the electrodialysis provides a lithium hydroxide solution from which most of the impurities have been removed.

It was found from the above tests that the lithium hydroxide solution can be prepared from the metal-containing solution, and that the acidic solution obtained by electrodialysis contains a large amount of fluoride ions as impurities.

### Description of Reference Numerals

1. bipolar membrane electrodialysis device
2 positive electrode
3 negative electrode
4, 7 bipolar membrane
5 anion exchange membrane
6 cation exchange membrane
R1 desalination chamber
R2 Acidic chamber
R3 alkaline chamber

## Claims

1. A method for recovering metals from battery powder of lithium ion battery waste, the method comprising:
an acid leaching step of leaching the metals in the battery powder with an acid to obtain a metal-containing solution containing lithium ions and other metal ions including manganese ions and/or aluminum ions;
a metal separation step of separating the other metal ions from the metal-containing solution, the metal separation step comprising extraction of manganese ions and/or aluminum ions from the metal-containing solution into a solvent and, after the extraction, stripping of manganese ions and/or aluminum ions from the solvent into a stripping solution; and,
after the metal separation step, an electrodialysis step of subjecting the metal-containing solution containing lithium ions and fluoride ions to electrodialysis using a bipolar membrane to obtain a lithium hydroxide solution and an acidic solution comprising fluoride ions,
wherein the acidic solution obtained in the electrodialysis step is used as at least part of the stripping solution in the metal separation step.

2. The method for recovering metals according to claim 1, wherein, in the metal separation step, a stripped solution obtained after the stripping comprises fluoride ions, and the stripped solution is subjected to a wastewater treatment.

3. A method for recovering metals from battery powder of lithium ion battery waste, the method comprising:
an acid leaching step of leaching the metals in the battery powder with an acid to obtain a metal-containing solution containing lithium ions and other metal ions including manganese ions and/or aluminum ions;
a metal separation step of separating the other metal ions from the metal-containing solution, the metal separation step comprising extraction of manganese ions and/or aluminum ions from the metal-containing solution into a solvent and, after the extraction, stripping of manganese ions and/or aluminum ions from the solvent into a stripping solution, and, after the stripping, scavenging of removing residual components from the solvent by a scavenging solution; and,
after the metal separation step, an electrodialysis step of subjecting the metal-containing solution containing lithium ions and fluoride ions to electrodialysis using a bipolar membrane to obtain a lithium hydroxide solution and an acidic solution comprising fluoride ions,
wherein the acidic solution obtained in the electrodialysis step is used as at least part of the scavenging solution in the metal separation step.

4. The method for recovering metals according to claim 3, wherein, in the metal separation step, a scavenged solution obtained after the scavenging comprises fluoride ions and calcium, and calcium fluoride is generated.

5. The method for recovering metals according to claim 4, wherein the scavenged solution is used as the acid in the acid leaching step after separating the calcium fluoride.

6. The method for recovering metals according to any one of claims 1 to 5, wherein a fluoride ion concentration of the lithium hydroxide solution is lower than that of the acidic solution.

7. The method for recovering metals according to any one of claims 1 to 5,
wherein the other metal ions comprise cobalt ions and/or nickel ions; and
wherein, in the metal separation step, the cobalt ions and/or the nickel ions are separated from the metal-containing solution by solvent extraction.

## Patentansprüche

1. Verfahren zum Rückgewinnen von Metallen aus Batteriepulver von Lithium-Ionen-Batterieabfall, das Verfahren umfassend:
einen Säureauslaugungsschritt eines Auslaugens der Metalle in dem Batteriepulver mit einer Säure, um eine metallhaltige Lösung zu erhalten, die Lithiumionen und andere Metallionen enthält, einschließlich Manganionen und/oder Aluminiumionen;
einen Metalltrennschritt zum Trennen der anderen Metallionen aus der metallhaltigen Lösung, der Metalltrennschritt umfassend eine Extraktion von Manganionen und/oder Aluminiumionen aus der metallhaltigen Lösung in ein Lösungsmittel und, nach der Extraktion, das Strippen von Manganionen und/oder Aluminiumionen aus dem Lösungsmittel in eine Stripplösung; und
nach dem Metalltrennungsschritt, einen Elektrodialyseschritt des Aussetzens der metallhaltigen Lösung, die Lithiumionen und Fluoridionen enthält, einer Elektrodialyse unter Verwendung einer bipolaren Membran, um eine Lithiumhydroxidlösung und eine saure Lösung, umfassend Fluoridionen, zu erhalten,
wobei die in dem Elektrodialyseschritt erhaltene saure Lösung mindestens als Teil der Stripplösung in dem Metalltrennschritt verwendet wird.

2. Verfahren zum Rückgewinnen von Metallen nach Anspruch 1, wobei in dem Metalltrennschritt eine nach dem Strippen erhaltene Stripplösung Fluoridionen umfasst und die Stripplösung einer Abwasserbehandlung unterzogen wird.

3. Verfahren zum Rückgewinnen von Metallen aus Batteriepulver von Lithium-Ionen-Batterieabfall, das Verfahren umfassend:
einen Säureauslaugungsschritt eines Auslaugens der Metalle in dem Batteriepulver mit einer Säure, um eine metallhaltige Lösung zu erhalten, die Lithiumionen und andere Metallionen enthält, einschließlich Manganionen und/oder Aluminiumionen;
einen Metalltrennschritt zum Trennen der anderen Metallionen aus der metallhaltigen Lösung, der Metalltrennschritt umfassend die Extraktion von Manganionen und/oder Aluminiumionen aus der metallhaltigen Lösung in ein Lösungsmittel und, nach der Extraktion, das Strippen von Manganionen und/oder Aluminiumionen aus dem Lösungsmittel in eine Stripplösung und, nach dem Strippen, Spülen von Entfernungsrestkomponenten aus der Lösung durch eine Spüllösung; und
nach dem Metalltrennungsschritt, einen Elektrodialyseschritt des Aussetzens der metallhaltigen Lösung, die Lithiumionen und Fluoridionen enthält, einer Elektrodialyse unter Verwendung einer bipolaren Membran, um eine Lithiumhydroxidlösung und eine saure Lösung, umfassend Fluoridionen, zu erhalten,
wobei die im Elektrodialyseschritt erhaltene saure Lösung mindestens als Teil der Spüllösung in dem Metalltrennschritt verwendet wird.

4. Verfahren zum Rückgewinnen von Metallen nach Anspruch 3, wobei in dem Metalltrennschritt eine Spüllösung, die nach dem Spülen erhalten wird, Fluoridionen und Calcium umfasst und Calciumfluorid erzeugt wird.

5. Verfahren zum Rückgewinnen von Metallen nach Anspruch 4, wobei die gespülte Lösung als Säure in dem Säureauslaugungsschritt nach dem Trennen des Calciumfluorids verwendet wird.

6. Verfahren zum Rückgewinnen von Metallen nach einem der Ansprüche 1 bis 5, wobei eine Fluoridionenkonzentration der Lithiumhydroxidlösung niedriger als die der sauren Lösung ist.

7. Verfahren zum Rückgewinnen von Metallen nach einem der Ansprüche 1 bis 5,
wobei die anderen Metallionen Kobaltionen und/oder Nickelionen umfassen; und
wobei in dem Metalltrennschritt die Kobaltionen und/oder die Nickelionen aus der metallhaltigen Lösung durch Lösungsmittelextraktion getrennt werden.

## Revendications

1. Procédé pour la récupération de métaux à partir de poudre de batterie de déchets de batteries lithium-ion, le procédé comprenant :
une étape de lixiviation acide consistant à lixivier les métaux dans la poudre de batterie avec un acide afin d'obtenir une solution contenant des métaux contenant des ions lithium et d'autres ions métalliques comportant des ions manganèse et/ou des ions aluminium ;
une étape de séparation des métaux consistant à séparer les autres ions métalliques de la solution contenant des métaux, l'étape de séparation des métaux comprenant l'extraction des ions manganèse et/ou des ions aluminium de la solution contenant des métaux dans un solvant et, après l'extraction, le dépouillement des ions manganèse et/ou des ions aluminium du solvant dans une solution de dépouillement ; et,
après l'étape de séparation des métaux, une étape d'électrodialyse consistant à soumettre la solution contenant des métaux contenant des ions lithium et des ions fluorure à une électrodialyse à l'aide d'une membrane bipolaire afin d'obtenir une solution d'hydroxyde de lithium et une solution acide comprenant des ions fluorure,
dans lequel la solution acide obtenue à l'étape d'électrodialyse est utilisée comme au moins une partie de la solution de dépouillement à l'étape de séparation des métaux.

2. Procédé pour la récupération de métaux selon la revendication 1, dans lequel, à l'étape de séparation des métaux, une solution dépouillée obtenue après le dépouillement comprend des ions fluorure, et la solution dépouillée est soumise à un traitement des eaux usées.

3. Procédé pour la récupération de métaux à partir de poudre de batterie de déchets de batteries lithium-ion, le procédé comprenant :
une étape de lixiviation acide consistant à lixivier les métaux dans la poudre de batterie avec un acide afin d'obtenir une solution contenant des métaux contenant des ions lithium et d'autres ions métalliques comportant des ions manganèse et/ou des ions aluminium ;
une étape de séparation des métaux consistant à séparer les autres ions métalliques de la solution contenant des métaux, l'étape de séparation des métaux comprenant l'extraction des ions manganèse et/ou des ions aluminium de la solution contenant des métaux dans un solvant et, après l'extraction, le dépouillement des ions manganèse et/ou des ions aluminium du solvant dans une solution de dépouillement et, après le dépouillement, le piégeage consistant à éliminer les composants résiduels du solvant au moyen d'une solution de piégeage ; et,
après l'étape de séparation des métaux, une étape d'électrodialyse consistant à soumettre la solution contenant des métaux contenant des ions lithium et des ions fluorure à une électrodialyse à l'aide d'une membrane bipolaire afin d'obtenir une solution d'hydroxyde de lithium et une solution acide comprenant des ions fluorure,
dans lequel la solution acide obtenue à l'étape d'électrodialyse est utilisée comme au moins une partie de la solution de piégeage à l'étape de séparation des métaux.

4. Procédé pour la récupération de métaux selon la revendication 3, dans lequel, à l'étape de séparation des métaux, une solution nettoyée par piégeage obtenue après le piégeage comprend des ions fluorure et du calcium, et du fluorure de calcium est généré.

5. Procédé pour la récupération de métaux selon la revendication 4, dans lequel la solution nettoyée par piégeage est utilisée comme acide dans l'étape de lixiviation acide après la séparation du fluorure de calcium.

6. Procédé pour la récupération de métaux selon l'une quelconque des revendications 1 à 5, dans lequel une concentration en ions fluorure de la solution d'hydroxyde de lithium est inférieure à celle de la solution acide.

7. Procédé pour la récupération de métaux selon l'une quelconque des revendications 1 à 5,
dans lequel les autres ions métalliques comprennent des ions cobalt et/ou des ions nickel ; et
dans lequel, à l'étape de séparation des métaux, les ions cobalt et/ou les ions nickel sont séparés de la solution contenant des métaux par extraction par solvant.
